# EUROPEAN PATENT SPECIFICATION

(11) **EP 1 805 874 B1**
(45) Date of publication and mention of the grant of the patent: **10.07.2013**
(21) Application number: 05796781.2
(22) Date of filing: 19.10.2005
(51) Int. Cl.: H02K 11/00

(54) **AN ELECTRIC MOTOR AND A MANUFACTURING METHOD**
ELEKTRISCHER MOTOR UND VERFAHREN ZU DESSEN HERSTELLUNG
MOTEUR ELECTRIQUE ET PROCEDE DE CONSTRUCTION ASSOCIE

(30) Priority: 22.10.2004 TR 200402831
(43) Date of publication of application: 11.07.2007
(73) Proprietor: Arçelik Anonim Sirketi, 34950 Istanbul (TR)
(72) Inventor: CIHAD, Ekin, Arcelik Anonim Sirketi, 34950 Istanbul (TR)
(86) International application number: PCT/IB2005/053417
(87) International publication number: WO 2006/043240

(56) References cited:
- EP-A- 0 871 282
- DE-A1- 4 417 883

## Description

This invention relates to a manufacturing method of an electric motor with a thermal switch.

In electric motors, overheating of motor windings, made of copper wire, as a consequence of overloading of the motor, for example because of rotor blockage or because of being exposed to excessive loads, implies a danger of fire and safety components such as thermal switches are utilized to overcome the mentioned problem. Thermal switches are capable of stopping the motor movement by cutting off the transfer of electric current as the motor temperature goes beyond a limiting value. Thermal switches are connected in series with the motor windings and are positioned in the motor such that they can sense the windings temperature. A motor with such a configuration is known from DE 4417883 A1, which comprises two motor windings with the thermal switch electrically connected between them.

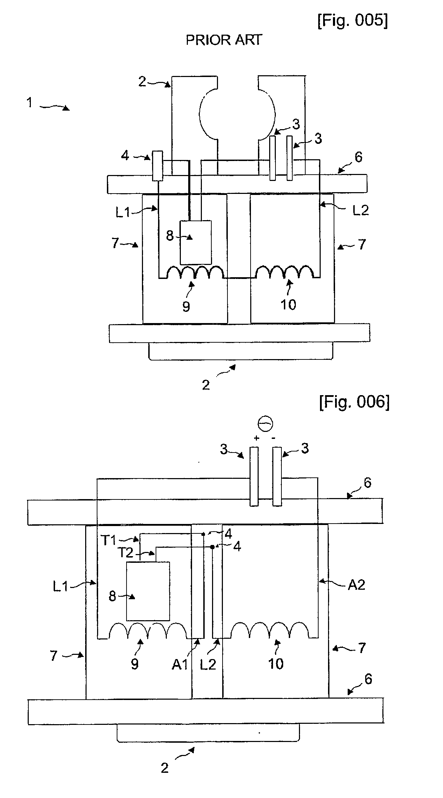

In an electric motor (1) comprising a U form stator (2) and polar windings (5) that are to be mounted to each arm of the U form of the stator (2), in accordance with the well-known winding process, windings (5) are continuously wound around the two coil formers (7) respectively, by means of a wire supplied from a single source. In order for the thermal switch (8) to be connected in series with the circuit formed by windings (5) and terminals (3), while one end of the winding (5) and one end of the thermal switch (8) are connected to a connector (4), the other end of the thermal switch (8) is connected to one of the terminals (3) which establishes the connection with the power supply and, the other end of the winding (5) is connected to the other terminal (3) (Figure 5). Particularly in serial manufacturing, in situations where the thermal switch (8) is added to the electric motor (1) afterwards, processing takes a longer period of time.

In the United States Patent Document US 6326879, a description is given of an application where a thermal switch is utilized in a synchronous monophase electric motor wherein the connections of the said thermal switch are passed through the internal surface of the end flange in the coil former where the motor windings are wound around and, wherein the Thermal switch is connected in series with the terminals which are attached to the insertion slots in the above-mentioned flange and which are used to establish the external electrical connection of the motor.

The aim of the present invention is to provide a manufacturing method, for an electric motor with a thermal switch providing safety as it senses a overheating in case of an overloadind, with a short amount of time during manufacturing.

The electric motor realized and the method in order to attain above mentioned aim of the present invention are illustrated in the attached drawings where:

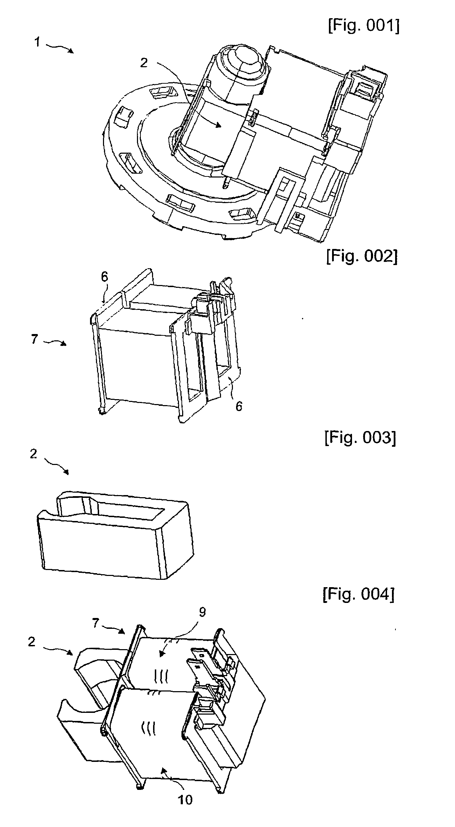

Fig.1 - is a perspective view of an electric motor.

Fig.2 - is a perspective view of a coil former.

Fig.3 - is a perspective view of a stator.

Fig.4 - is a perspective view of a stator grouped with a coil former.

Fig.5 - is a schematic view of an electric motor comprising a thermal switch, in the state of the art.

Fig.6 - is a schematic view of an electric motor comprising a thermal switch positioned on a polar winding.

Fig.7 - is a schematic view of an electric motor comprising winding ends and thermal switch ends which are joined by means of connectors located on the coil former.

Fig.8 - is a schematic view of an electric motor comprising a thermal switch positioned between polar windings.

Elements shown in the drawings are numbered as follows:
1. Electric motor
2. Stator
3. Terminal
4. Connector
5. Winding
6. Winding limiter
7. Coil former
8. Thermal switch
9. First polar winding
10. Second polar winding

The electric motor (1), used in discharge pumps in such appliances as washing machines and dishwashers, comprises a stator (2) preferably in U form, a power supply or two terminals (3) establishing electrical connection with the network, more than one connectors (4) used for connections of conductive components, a winding (5) which consists of isolated copper wire and, the diameter and the winding number of which are determined in accordance with the desired power and rpm, one or more coil formers (7), preferably made of plastic material, where the winding (5) is wound around and which incorporates more than one winding limiters (6) enabling said winding (5) to be insulatedly mounted to the stator (2) and that bounds the winding, and, a thermal switch (8) which cuts off the electricity in case of an overheating as a result of overloading of the electric motor (1) in cases such as a rotor blockage.

The winding (5) comprises a first polar winding (9) which has a starting end (L1) and a finishing end (A1), attached to one of the stator (2) arms and wound around the coil former (7), and a second polar winding (10) which has a starting end (L2) and a finishing end (A2), attached to the other arm of the stator (2) and wound around the coil former (7).

The thermal switch (8) comprises two thermal ends (T1, T2) providing its connection in series between the polar windings (9, 10) and establishing the electrical connection by being attached to the finishing end (A1) of the first polar winding (9) and to the starting end (L2) of the second polar winding (10) by means of connectors (4).

The starting end (L1) of the first polar winding (9) is connected to a terminal (3) whereas the finishing end (A2) of the second polar winding (10) is connected to the other terminal (3). Thus, following serial connection is achieved: terminal (3) - L1 - first polar winding (9) - A1 - connector (4) - T1 - thermal switch (8) - T2 - connector (4) - L2 - second polar winding (10) - A2 - terminal (3).

In the preferred embodiment of the present invention, during the manufacturing of the electric motor (1), the first and second polar windings (9, 10) are wound around two coil formers (7) separately, preferably simultaneously, by means of two winding wires supplied from two separate wire source. Through the mentioned method, it is accomplished to improve the processing time approximately 50 % compared to the manufacturing techniques wherein the first and second polar windings (9, 10) are wound around coil formers (7) one after the other by means of a wire supplied from a single wire source.

Since the first and second polar windings (9, 10) are wound separately, it is achieved to have the finishing end (A1) of the first polar winding (9) and the starting end (L2) of the second polar winding (10) at desired lengths and to obtain flexibility while choosing the location where the thermal switch (8) is to be mounted on the electric motor (1) to sense the temperature.

The thermal switch (8) is positioned preferably onto the first and/or second polar winding (9, 10) and, one of the thermal ends (T1) is joined with the finishing end (A1) of the first polar winding (9) whereas the other thermal end (T2) is joined with the starting end (L2) of the second polar winding (10) and furthermore, T1 - A1 and T2 - L2 ends are connected to each other by means of connectors (4) wherein the portions of said connectors contacting the polar windings (9, 10) are insulated (Figure 6).

In the embodiment electrical energy is obtained from a power supply by means of terminals (3) and, the current is enabled to pass through the winding (5) by following the terminal (3) - L1- first polar winding (9) - A1 - connector (4) - T1 - thermal switch (8) - T2 - connector (4) - L2 - second polar winding (10) - A2 - terminal (3) circuit, wherein the stator (2) rotates the rotor by means of the magnetic field created meanwhile, and wherein the electric motor (1) is permitted to continue operating unless the winding (5) temperature does not excessively increase.

In a situation where the discharge pump actuated by the electrical motor (1) under discussion is overloaded anyhow or the rotor is locked, the winding (5) temperature starts to increase since the current continues to pass through the circuit. The thermal switch (8), that is capable of sensing the increased temperature and that is connected in series with the circuit, cuts off the current by opening the said circuit and stops the operation of the electric motor (1). When the winding (5) temperature turns back to normal values, the thermal switch (8) permits the flow of electric current by closing the circuit and enables the electric motor (1) to operate.

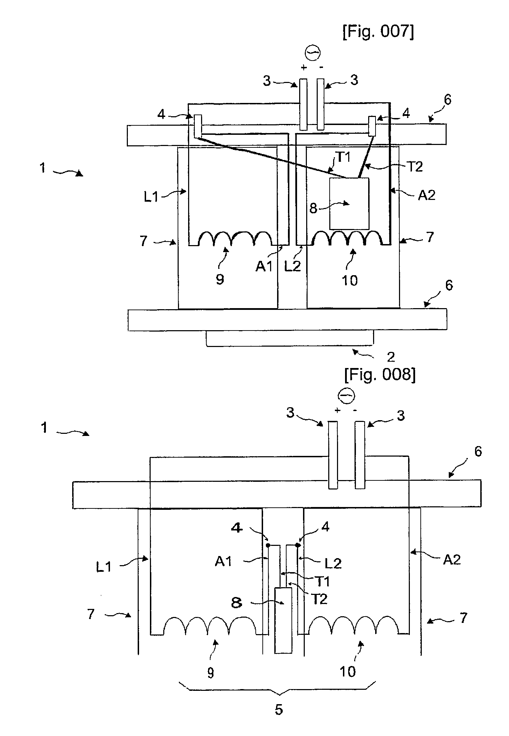

In another embodiment thermal ends (T1, T2) and the finishing and starting ends (A1, L2) of the first and second polar windings (9, 10), respectively, are joined together by means of connectors (4) located on the winding limiter (6). Thereby, the connectors (4) are put away from the winding (5) and because the winding limiters (6) are manufactured from insulating material, it is not necessary to isolate the connectors (4) and moreover, it is achieved that said connectors (4) are prevented from being damaged as a result of overheating (Figure 7).

The thermal switch (8) is positioned between the first and second polar windings (9, 10) by being pressed fit and thereby it is achieved to sense the heatin of the electric motor (1) more effectively (Figure 8).

According to the present invention, the first and second polar windings (9, 10) are wound one after the other by means of a wire supplied from a single source and, by connecting the starting end (L1) of the first polar winding (9) and the finishing end (A2) of the second polar winding (10) to the terminals, the circuit is completed without positioning the thermal switch (8). Afterwards, by cutting the continuous winding wire at the point of transfer from the first polar winding (9) to the second polar winding (10) of the winding (5), the finishing end (A1) of the first polar winding (9) and the starting end (L2) of the second polar winding (10) where the thermal ends (T1, T2) are to be connected are formed and, the thermal ends (T1, T2) of the thermal switch (8) are connected to the mentioned ends (A1, L2) which are formed later. Thereby, without a need for a change in the winding process, by means of a simple and low-cost method, the thermal switch (8) is adapted to the electric motor (1) the manufacturing of which is completed.

During the manufacturing of the electric motor (1), as a result of the fact that polar windings (9, 10) are wound independently or that they are separated by cutting at the transfer point, easy connection of the thermal switch (8) in series between the polar windings (9, 10) and flexibility while choosing the location where the thermal switch (8) is to be positioned on the electric motor (1) is achieved, reducing the time needed for winding procedure.

## Claims

1. A manufacturing method for an electric motor (1),
the electrical motor (1) comprising
a stator (2) and one or more than one coil former (7),
a winding (5) attached to the stator (2) by being wound around the coil former (7) and comprising a first polar winding (9) which has a starting end (L1) and a finishing end (A1) and a second polar winding (10) which has a starting end (L2) and a finishing end (A2) and
a thermal switch (8) comprising two thermal ends (T1, T2) whereby the thermal switch (8) is connected in series between the polar windings (9, 10), establishing the electrical connection wherein one of the said thermal ends (T1) is connected to the finishing end (Al) of the first polar winding (9) and whereas the other thermal end (T2) is connected to the starting end (L2) of the second polar winding (10),
and with the manufacturing method comprising following steps:
Winding the first and the second polar windings (9, 10) around coil formers (7) one after the other continuously, by means of a winding wire supplied from a single source ;
Forming the finishing end (Al) of the first polar winding (9) and the starting end (L2) of the second polar winding (10) where the thermal ends (T1, T2) are to be connected, by cutting the continuous winding wire at the point of transfer from the first polar winding (9) to the second polar winding (10) of the winding (5) ;
Connecting the thermal ends (T1, T2) of the thermal switch (8) to the finishing and starting ends.

2. A manufacturing method for an electric motor (1) as described in Claim 1, **characterized by** the coil former (7) which comprises more than one connector (4) whereby the connection between the thermal ends (T1, T2) and the finishing end (Al) of the first polar winding (9) and the starting end (L2) of the second polar winding (10) is established, and more than one winding limiter (6) whereon connectors (4) are positioned and bounding the winding (5).

3. A manufacturing method for an electric motor (1) as described in Claim 1, **characterized by** the thermal switch (8) positioned between the first and second polar windings (9, 10) by being pressed fit.

## Patentansprüche

1. Herstellungsverfahren für einen Elektromotor (1),
wobei der Elektromotor (1) Folgendes umfasst:
einen Stator (2) und einen oder mehrere Spulenkörper (7),
eine Wicklung (5), die am Stator (2) angebracht ist, indem sie um den Spulenkörper (7) gewickelt ist, und eine erste Polarwicklung (9), die ein Anfangsende (L1) und ein Abschlussende (A1) aufweist, und eine zweite Polarwicklung (10) umfasst, die ein Anfangsende (L2) und ein Abschlussende (A2) aufweist, und
einen Wärmeauslöser (8), der zwei Wärmeenden (T1, T2) umfasst, wodurch der Wärmeauslöser (8) in Serie zwischen den Polarwicklungen (9, 10) verbunden wird und die elektrische Verbindung herstellt, wobei eines der Wärmeenden (T1) mit dem Abschlussende (A1) der ersten Polarwicklung (9) verbunden ist und das andere Wärmeende (T2) mit dem Anfangsende (L2) der zweiten Polarwicklung (10) verbunden ist,
und wobei das Herstellungsverfahren folgende Schritte umfasst:
kontinuierliches Wickeln der ersten und zweiten Polarwicklung (9, 10) um Spulenkörper (7), eine nach der anderen, mithilfe eines Wickeldrahtes, der von einer einzelnen Quelle bereitgestellt wird;
Ausbilden des Abschlussendes (A1) der ersten Polarwicklung (9) und des Anfangsendes (L2) der zweiten Polarwicklung (10), wo die Wärmeenden (T1, T2) verbunden werden sollen, indem der kontinuierliche Aufwicklungsdraht an der Stelle des Übergangs von der ersten Polarwicklung (9) zur zweiten Polarwicklung (10) der Wicklung (5) geschnitten wird;
Verbinden der Wärmeenden (T1, T2) des Wärmeauslösers (8) mit dem Abschluss- und dem Startende (A1, A2, L1, L2).

2. Herstellungsverfahren für einen Elektromotor (1) nach Anspruch 1, **dadurch gekennzeichnet, dass** der Spulenkörper (7) mehrere Anschlüsse (4) umfasst, wodurch die Verbindung zwischen den Wärmeenden (T1, T2) und dem Abschlussende (A1) der ersten Polarwicklung (9) und dem Anfangsende (L2) der zweiten Polarwicklung (10) hergestellt wird, und mehrere Wicklungsbegrenzer (6), an denen die Anschlüsse (4) angeordnet sind und die die Wicklung (5) begrenzen.

3. Herstellungsverfahren für einen Elektromotor (1) nach Anspruch 1, **dadurch gekennzeichnet, dass** der Wärmeauslöser (8) durch Presspassen zwischen der ersten und zweiten Polarwicklung (9, 10) angeordnet wird.

## Revendications

1. Un procédé de fabrication d'un moteur électrique (1),
le moteur électrique (1) comprenant :
un stator (2) et une ou plus d'une armature de bobine (7),
un enroulement (5) attaché au stator (2) en étant enroulé autour de l'armature de bobine (7) et comprenant un premier enroulement polaire (9) qui a une extrémité de départ (L1) et une extrémité de finition (A1) et comprenant en outre un second enroulement polaire (10) qui a une extrémité de départ (L2) et une extrémité de finition (A2) et
un thermocontact (8) comprenant deux extrémités thermiques (T1, T2) au moyen desquelles le thermocontact (8) est relié en série entre les enroulements polaires (9, 10), en réalisant une connexion électrique où l'une desdites extrémités thermiques (T1) est reliée à l'extrémité de finition (A1) du premier enroulement polaire (9) et où l'autre extrémité thermique (T2) est reliée à l'extrémité de départ (L2) du second enroulement polaire (10),
et avec le procédé de fabrication comprenant les étapes suivantes:
Enrouler les premier et second enroulements polaires (9, 10) autour des armatures de bobine (7) l'un après l'autre continuellement, au moyen d'un fil de bobinage alimenté d'une seule source ;
Former l'extrémité de finition (A1) du premier enroulement polaire (9) et l'extrémité de départ (L2) du second enroulement polaire (10) où les extrémités thermiques (T1, T2) doivent être connectées, en coupant le fil de bobinage continu au point de transfert du premier enroulement polaire (9) au second enroulement polaire (10) de l'enroulement (5) ;
Relier les extrémités thermiques (T1, T2) du thermocontact (8) aux extrémités de finition et de départ (A1, A2, L1, L2).

2. Un procédé de fabrication d'un moteur électrique (1) selon la Revendication 1, **caractérisé par** l'armature de bobine (7) qui comprend plus d'un connecteur (4) au moyen duquel la liaison entre les extrémités thermiques (T1, T2) et l'extrémité de finition (A1) du premier enroulement polaire (9) et l'extrémité de départ (L2) du second enroulement polaire (10) est réalisée, et plus d'un limiteur d'enroulement (6) sur lequel les connecteurs (4) sont positionnés et qui limite l'enroulement (5).

3. Un procédé de fabrication d'un moteur électrique (1) selon la Revendication 1, **caractérisé par** le thermocontact (8) positionné entre les premier et second enroulements polaires (9, 10) en étant monté à la presse.
